(19) Europäisches Patentamt
European Patent Office
Office européen des brevets

(11) **EP 3 325 333 B1**

(12) **EUROPÄISCHE PATENTSCHRIFT**

(45) Veröffentlichungstag und Bekanntmachung des Hinweises auf die Patenterteilung:
**18.05.2022   Patentblatt 2022/20**

(21) Anmeldenummer: **16750357.2**

(22) Anmeldetag: **14.07.2016**

(51) Internationale Patentklassifikation (IPC):
***B62K 19/36*** *(2006.01)*     ***B62J 1/08*** *(2006.01)*

(52) Gemeinsame Patentklassifikation (CPC):
**B62K 19/36;** B62J 2001/085

(86) Internationale Anmeldenummer:
**PCT/AT2016/060006**

(87) Internationale Veröffentlichungsnummer:
**WO 2017/011845 (26.01.2017 Gazette 2017/04)**

(54) **TELESKOPIERBARE SATTELSTÜTZE FÜR FAHRRADRAHMEN**

TELESCOPIC SEAT POST FOR BICYCLE FRAMES

TIGE DE SELLE TÉLESCOPIQUE POUR CADRE DE BICYCLETTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2015   AT 4812015**

(43) Veröffentlichungstag der Anmeldung:
**30.05.2018   Patentblatt 2018/22**

(73) Patentinhaber: **Lupaan GmbH**
**4020 Linz (AT)**

(72) Erfinder: **EBERLBERGER, Lukas**
**4470 Enns (AT)**

(74) Vertreter: **Torggler & Hofmann Patentanwälte - Innsbruck**
**Torggler & Hofmann Patentanwälte GmbH & Co KG**
**Postfach 85**
**6020 Innsbruck (AT)**

(56) Entgegenhaltungen:
CN-Y- 2 261 975          NL-A- 9 001 358
US-A1- 2014 112 703    US-B1- 7 364 179

## Beschreibung

Die Erfindung betrifft eine Anordnung aus einer teleskopierbaren Sattelstütze und einem Fahrradrahmen nach dem Oberbegriff des Anspruches 1.

Teleskopierbare Sattelstützen zählen bereits zum Stand der Technik und werden beispielsweise in der EP 2284068 A2 gezeigt, der CN 2 261 975 Y, der US 2014 112703 A1, der US 7 364 179 B1 und der NL 9001 358 A. CN 2 261 975 Y offenbart die Merkmale des Oberbegriffs des Anspruchs 1.

Herkömmliche Sattelstützen sind über manuelles Lösen eines Klemmmechanismus am Rahmen entlang des Sattelrohres verstellbar. Die Verstellung der Sattelstütze entlang des Sattelrohres erfolgt dabei durch Lösen des Klemmmechanismus und anschließendem Ziehen oder Hineindrücken der Sattelstütze entlang des Sattelrohres. Um die Position der Sattelstütze relativ zum Sattelrohr verstellen zu können, muss man somit vom Fahrrad absteigen. Variable oder teleskopierbare Sattelstützen lassen sich über eine Art Fernbedienung entweder von unter dem Sitz aus oder durch eine "remote"-Schaltung vom Lenker des Fahrrades aus bedienen. Dabei wird der Klemmmechanismus geöffnet und die Sattelstütze fährt aufgrund einer darin befindlichen Kraftquelle (hydraulisch, pneumatisch, Federkraft, ...) aus und kann anschließend über den Klemmmechanismus in einer Position verriegelt werden. Das Absenken der Sattelstütze erfolgt durch das Eigengewicht des Bedieners. Dieser drückt mit seinem Körpergewicht die Sattelstütze in das Sattelrohr hinein und arretiert über den "remote"-Klemmmechanismus deren gewünschte Position. Variable Sattelstützen oder teleskopierbare Sattelstützen, vor allem hydraulische, teleskopierbare Sattelstützen, sind aufgrund vieler zueinander beweglicher Komponenten sehr wartungsintensiv. Hydraulische Stützen arbeiten durch Kammern, in welchen sich ein Hydraulikmedium wie Öl befindet. Falls eine Kammer undicht wird, trägt dies das Risiko eines Ölverlusts mit sich und die Funktion der automatischen Verstellung der Teleskopsattelstütze ist nicht mehr gegeben. Neben dem Aspekt der Umweltverschmutzung durch austretendes Öl sollte auch der Aspekt des Gewichtes des Öles oder anderen hydraulischen Medien in Betracht gezogen werden. Ein mit Öl befüllter Behälter erhöht das Gewicht der variablen Sattelstütze und somit auch des Fahrrads. Die als Stand der Technik angeführte Sattelstütze wird durch das in den Kammern befindliche Hydraulikmedium in seiner Position relativ zum Sattelrohr gehalten. Eine generelle Einstellung und Anpassung der Sattelstütze an den Fahrer kann nur über die Veränderung des Ölvolumens in den Kammern hergestellt werden. Ein Ausführungsbeispiel zeigt auch eine schwer zugängliche Verstelleinheit im Sattelrohr des Rahmens zur Verstellung des Anschlages der Stütze, wobei die Verstellung über eine Überwurfmutter von unten am Rahmen erfolgt. Hierzu muss das Fahrrad entweder umgedreht, gekippt oder angehoben werden, um mit einem Werkzeug von unten durch das Sattelrohr die Verstellung durchführen zu können. Dabei besteht auch das Risiko, dass bei der Entfernung der Überwurfmutter das Öl aus den Kammern entweicht. Weiters kann bei dieser Konstruktion das Sattelrohr nicht wie üblich mit dem Tretlagergehäuse verbunden werden, da das Sattelrohr von unten zugänglich bleiben muss. Dies spiegelt sich hinsichtlich der Torsionssteifigkeit des Rahmens und der Stabilität des Fahrrades wider.

Andere variable Teleskopsattelstützen wie Beispielsweise die US 2009/0324327 weisen mehrere ineinander geschobene, teleskopierbare Elemente auf, die zueinander abgedichtet werden müssen. Diese Sattelstütze wird als Einheit in das Sattelrohr gesteckt und mit der Sattelklemme fixiert. Die Sattelklemme nimmt dabei sämtliche Kräfte auf und überträgt diese in einem relativ kleinen Klemmbereich an die einzelnen Wandungen der Teleskopsattelstütze. Dieser Bereich muss stark genug dimensioniert sein, um die Klemm- und Sattel-Kräfte kompensieren zu können, was sich im Gewicht dieser Komponenten zeigt. Weiters verschleißen Komponenten wie Sattelklemmen und auch das Sattelrohr bei mehrmaligem Wechseln der Teleskopsattelstützen im Befestigungsbereich. Zusätzlich liegen bei in sich geschlossenen Systemen wie im Stand der Technik gezeigt die Dichtungen oder Abstreifer im Montagezustand oft nach oben. Im Spalt zwischen den Abstreifern und den beweglichen Bereichen der Stützen sammeln sich Verunreinigungen wie Feuchtigkeit und Staub, welche bei der Absenkbewegung der Stütze auch ins Innere der Stütze gelangen können und somit Beschädigungen an den sensiblen Komponenten verursachen. Durch die ineinander greifenden einzelnen Teleskopsegmente bzw. dem darin befindlichen Kraftspeicher und Arretiersystem ist eine sehr kompakte Bauweise notwendig. Durch diese kompakte Bauweise und die mehrfach ineinander verschachtelten Elemente werden somit nur noch geringe Hubhöhen an der Sattelstütze erreicht. Mehrfach ineinander verschachtelte Teleskopelemente führen auch dazu, dass eines der Teleskopsegmente einen relativ geringen Rohrdurchmesser erreicht und somit für die auftretenden Kräfte unterdimensioniert ist. Oftmals ist es auch nicht möglich, das in sich geschlossene Stützensystem in seiner generellen Gesamtlänge anzupassen und auf die Gegebenheiten des Fahrradfahrers einstellen zu können. Eine variable Teleskopsattelstütze kann nicht einfach abgeschnitten werden und somit an die Körpermaße des Fahrers, wie beispielsweise Innenschrittlänge, angepasst werden. Weiters weisen Teleskopsattelstützen der bekannten Art oftmals sehr stark ausgeprägte Rasterung auf, in welche das Arretierelement eingreift, um die Sattelstütze in Position zu halten. Diese Rasterungen schwächen den Querschnitt der Sattelstütze, vor allem dann, wenn sie sich um den gesamten Umfang der rohrförmigen Sattelstütze erstrecken. Um eine geringe Querschnittsschwächung zu erzielen, muss somit eine stärkere Wandung bei den Teleskopsegmenten verwendet oder diese ausreichend durch weitere Rohre gestützt werden, was sich negativ in der Gewichtsbilanz der Sattelstütze auswirkt.

Ein weiteres Problem bei bestehenden Systemen, insbesondere bei mechanischen Systemen, ist die ungebremste Ausfahrgeschwindigkeit des beweglichen Elements. Radial- und Axialnuten, Züge und andere Mechanik verhindern die Möglichkeit einer Drosselung des Luftstromes. Dies ist nicht sehr komfortabel in der Anwendung, darüber hinaus ist dies nicht mit geringen Rastabständen vereinbar, da die Wahrscheinlichkeit einer nicht korrekten Einraststellung drastisch steigt. Das undefinierte und benutzerabhängige Lösen und Verriegeln des Arretiermechanismus ist ein weiteres Kriterium, weshalb keine geringeren Rastabstände als 20mm erreicht werden, da der Arretiervorgang mit geringer werdenden Rastabständen und steigender Ausfahrgeschwindigkeit, schneller und definierter stattfinden muss. Die daraus resultierenden großen Rastabstände verhindern die Möglichkeit einer Feineinstellung der obersten Sattelposition durch die Begrenzung des Hubes. Es ist möglich, dass der Fahrer den Sattel nicht weit genug begrenzen kann, wodurch er auf eine variable Sattelstütze mit weniger Hub umrüsten muss.

Aufgabe der Erfindung ist es, die vorbeschriebenen Nachteile zu vermeiden und eine gegenüber dem Stand der Technik verbesserte teleskopierbare Sattelstütze und eine verbesserte Positioniervorrichtung anzugeben.

Dies wird bei der erfindungsgemäßen teleskopierbaren Sattelstütze durch die Merkmale des Anspruchs 1 erreicht.

Dadurch, dass das Stützelement einen Befestigungsabschnitt aufweist, der über ein quer zur Längsachse des Sattelrohres einsetzbares Befestigungselement mit dem Sattelrohr verbindbar ist, werden axiale Belastungen auf die Sattelstütze direkt in das Sattelrohr eingeleitet und nicht über einen Bereich am oberen Ende des Sattelrohres, versehen mit einer Sattelklemme. Weiters kann über ein einfaches Lösen des Befestigungselementes die komplette Sattelstütze aus dem Fahrradrahmen entfernt werden. Dabei muss das Fahrrad weder umgelegt, gekippt noch angehoben werden, da das Befestigungsmittel leicht zugänglich an dem Sattelrohr positioniert ist.

Dadurch, dass das Stützelement mit dem Befestigungsabschnitt verbunden ist und das Stützelement im Teleskopelement gelagert ist, erfolgt eine günstige Kraftübertragung vom Teleskopelement auf das Stützelement und somit direkt in den Fahrradrahmen. Keine weiteren Rohre oder Teleskopelemente werden benötigt, um die Kräfte aufzunehmen, was sich in der Gewichtsbilanz der Sattelstütze und somit auch am Fahrrad sehr positiv auswirkt. Durch die Verwendung von nur zwei ineinander verschiebbaren Elementen (Teleskopelement und Stützelement) wird nicht nur an Gewicht gespart, es wird auch ein maximaler Systemhub zur Verstellung der Sattelstütze erreicht. Durch den großen Systemhub kann eine möglichst große Bandbreite an verschiedenen Fahrern abgedeckt und eine maximale Bewegungsfreiheit bereitgestellt werden.

Die auftretenden Kräfte, die bei der Bedienung des Fahrrades - insbesondere Mountainbikes - auftreten, werden optimal aufgenommen - Biegekräfte werden direkt in einen stabilen und Torsionssteifen Bereich des Rahmens eingeleitet und müssen nicht durch die Sattelstütze oder eine Sattelklemme kompensiert werden.

Dadurch, dass die Befestigung des Befestigungsabschnittes durch ein lösbares Befestigungselement erfolgt, kann die Sattelstütze im Bedarfsfall montiert oder demontiert werden. Dies ist beispielsweise beim Verladen und Transportieren des Fahrrades in ein Fahrzeug oder bei Wartungsarbeiten notwendig.

Wenn das Befestigungselement mit zumindest einem Verbindungsabschnitt des Sattelrohres verbunden ist, wobei sich die Verbindungsabschnitte im Wesentlichen in einer unteren Hälfte des Sattelrohres befinden, so erfolgt eine günstige Krafteinleitung im unteren Bereich des Sattelrohres nahe dem Tretlager. Dort ist der Rahmen des Fahrrades sehr steif und die Krafteinleitung der Sattelstütze am günstigsten. Wenn die Verbindungsabschnitte beispielsweise durch vorgeformte Ösen mit Einsenkungen ausgestaltet sind, wird das Einführen des Befestigungselementes vereinfacht. Weist zumindest ein Verbindungsabschnitt dabei eine Passung oder ein Gewinde auf, erfolgt ein spielfreies Befestigen des Befestigungselementes am Sattelrohr des Fahrradrahmens.

Als besonders vorteilhaft hat es sich dabei herausgestellt, wenn die Sattelstütze eine Überlastkupplung aufweist, welche im Montagezustand bei Überlast ein Verdrehen der Sattelstütze relativ zum Sattelrohr um die Längsachse des Sattelrohres zulässt. Bei einem Stutz mit dem Fahrrad kann es sein, dass der Fahrradsattel mit einem Hindernis kontaktiert und eine stoßartige Belastung auf die Sattelstütze einwirkt. Dies hat zur Folge, dass die Sattelstütze, der Sattel oder auch der Fahrradrahmen beschädigt wird. Durch die Überlastkupplung können diese auftretenden Kräfte kompensiert und eine Beschädigung verhindert werden.

Wenn die Sattelstütze nach einer Verdrehung der Überlastkupplung werkzeuglos in ihre ursprüngliche Lage zurückstellbar ist oder sich diese automatisch in ihre ursprüngliche Lage zurückstellt, kann der Radfahrer nach dem Verdrehen der Überlastkupplung die Sattelstütze und somit auch den Sattel in seine korrekte Position zurückstellen oder findet diese bereits zurückgestellt in die ursprüngliche Form wieder. Somit kann das Fahrrad nach einem Sturz oder einem versehentlichen Verdrehen der Sattelstütze wieder verwendet werden, ohne die Sattelstütze mit einem Werkzeug in die ursprüngliche Position zurückdrehen zu müssen.

Als besonders vorteilhaft hat es sich dabei herausgestellt, dass die Überlastkupplung zwischen Stützelement und dem Befestigungsabschnitt positioniert ist, da in diesem Bereich die Einstelelemente der Überlasteinheit gut erreichbar sind und optimal dimensioniert werden können. In dem Bereich, in welchen Kräfte eingeleitet werden, gibt durch die Überlastkupplung die Sattelstütze nach und lässt sich der Überlast verdrehen. Darüber (und auch darunter) liegende Komponenten werden dabei geschützt.

Wenn der Befestigungsabschnitt zusammen mit dem Befestigungselement eine Ausgleichsvorrichtung ausbildet, welche in Montagestellung der Sattelstütze Unterschiede in Form, Maße und Toleranz zwischen Sattelrohr und der Sattelstütze ausgleicht, so hat dies zur Folge, dass Fertigungstoleranzen oder Formunterschiede zwischen Sattelrohr und Sattelstütze nicht durch Unterlegscheiben, Adapter oder Nacharbeit ausgeglichen werden müssen. Die Sattelstütze wird in das Sattelrohr eingeschoben, das Befestigungselement wird eingesetzt und befestigt. Keine zusätzlichen Einstellarbeiten müssen vorgenommen werden. Die Ausgleichsvorrichtung übernimmt diese Aufgabe selbständig, da die Ausgleichsvorrichtung mehrere Bestandteile aufweist, welche im losen Zustand des Befestigungselementes relativ zueinander verschiebbar und/oder verdrehbar sind und im befestigten Zustand des Befestigungselementes im Befestigungsabschnitt zueinander unbeweglich sind. In anderen Worten wird durch das Befestigen des Befestigungselementes die Ausgleichsvorrichtung gesperrt und in ihrer Position verriegelt. An der Ausgleichsvorrichtung befindet sich das Stützelement, welches nach dem Befestigen des Befestigungselementes in seiner Position verharrt und die komplette Sattelstütze in ihrer Position am Fahrradrahmen hält. Fertigungstoleranzen am Sattelrohr können über diese Ausgleichsvorrichtung ausgeglichen werden.

Wenn das Stützelement einen Kraftspeicher aufweist oder durch einen Kraftspeicher - vorzugsweise einem Gasdruckzylinder - ausgebildet wird, so lässt sich das Teleskopelement entlang des Stützelements automatisch bewegen. Wird ein sperrbarer Gasdruckzylinder verwendet, spiegelt sich dies in der Gewichtsbilanz des Fahrrades wieder. Hydraulikmedien, Elastomer- oder Federspeicher sind deutlich schwerer als beispielsweise ein Gasdruckzylinder.

Als besonders vorteilhaft hat es sich dabei herausgestellt, dass ein Gleitelement am Sattelrohr angeordnet ist, in welchem das Teleskopelement entlang der Längsachse verschiebbar gelagert ist, wobei zumindest ein Abstreifer am Gleitring angeordnet ist. Radialkräfte, welche an der Sattelstütze auftreten, werden über das Gleitelement in das obere Ende des Sattelrohres eingeleitet. Die Axialbelastung, welche durch das Körpergewicht des Fahrers generiert wird, wird durch das Befestigungselement im unteren Bereich des Sattelrohres in den Rahmen eingeleitet. Dadurch, dass nur Radialkräfte im oberen Bereich des Sattelrohres aufgenommen werden müssen und nicht, wie bei z. B. der Verwendung einer Sattelrohrklemme mit Schnellspanner auch die Axialkräfte, kann dieser Bereich durch eine Kunststoffrohr ausgebildet werden, was sich in der Gewichtsbilanz des Fahrrades positiv auswirkt. Kunststoff weist zusätzlich gute Gleiteigenschaften auf und ist oftmals auch selbstschmierend - bedarf somit keiner Wartung. Zur Vermeidung von Eintreten von Verunreinigungen wird ein Abstreifer an dem Gleitring angeordnet.

Wenn die Rasterung in der Innenfläche des Teleskopelementes angeordnete und in Umfangsrichtung begrenzte Radialnuten aufweist, so wird die Gefahr reduziert, durch zu groß ausgestaltete, sich entlang ihrer Umfangsrichtung komplett erstreckende, Radialnuten eine Verminderung des Querschnittes zu erzeugen. In Umfangsrichtung begrenzte Nuten reduzieren somit die Bruchgefahr an der Sattelstütze und eröffnen die Möglichkeit eine Sattelstütze mit einem geringeren Gewicht herzustellen. Die in Umfangsrichtung begrenzten Radialnuten werden links und rechts der Fahrradlängsachse platziert, sodass diese bei Biegebelastung der Sattelstütze in der neutralen Faser liegen und somit keine Schwächung der Rohrstruktur entsteht.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:

Fig. 1        Fahrradrahmen Schnittdarstellung mit eingesetzter Sattelstütze in Montagestellung,

Fig. 2a, 2b   Detailzeichnung; Detail A aus Fig. 1 in unterschiedlich geschnittenen Darstellungen,

Fig. 3        Überlastkupplung und Ausgleichsvorrichtung an Stützelement,

Fig. 4        Explosionszeichnung Überlastkupplung und Ausgleichsvorrichtung,

Fig. 5        Einbau Sattelstütze und Befestigungselement,

Fig. 6        Befestigungselement mit Schnellspanner,

Fig. 7        Variante Befestigungsmittel,

Fig. 8        Variante Führungsnut Stützelement zu Teleskopelement,

Fig. 9        eine Positioniervorrichtung in einer Schnittdarstellung,

Fig. 10       ein Anwendungsbeispiel der Positioniervorrichtung in einer teleskopierbaren Sattelstütze,

Fig. 11a, 11b Explosionszeichnungen Arretiervorrichtung,

Fig. 12       Schnittdarstellung Positioniervorrichtung,

Fig. 13a, 13b Querschnittszeichnungen Führungselement und Arretiervorrichtung,

Fig. 14a, 14b Konstruktionsdetails Rasterung und Arretiervorrichtung,

Fig. 15a, 15b Querschnittszeichnung und Schnittdarstellung Positioniervorrichtung mit Anschlagspindel und

Fig. 16a, 16b Remotesteuerung und Kraftquelle.

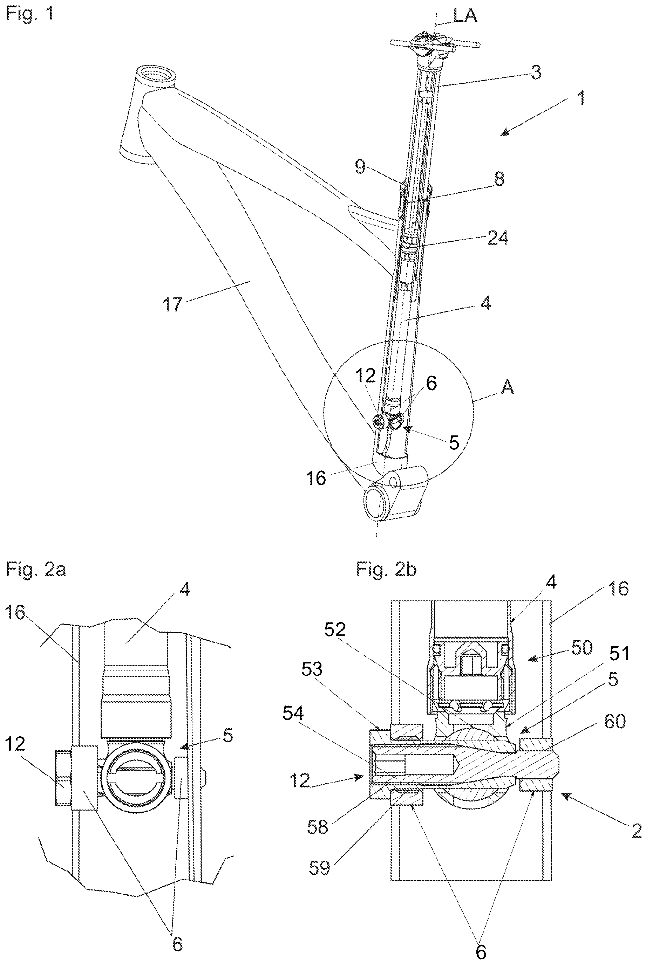

Fig. 1 zeigt einen Fahrradrahmen 17, dessen Sattelrohr 16 sich oberhalb des Tretlagers nach oben erstreckt und einen Hohlkörper ausbildet, in dem sich die teleskopierbare Sattelstütze 1 befindet. Die teleskopierbare Sattelstütze 1 ist am Befestigungsabschnitt 5 mit dem Befestigungselement 12 mit dem Sattelrohr 16 verbunden. Am oder im Sattelrohr 16 befindet sich zumindest ein Verbindungsabschnitt 6, durch welchen das Befestigungselement 12 hindurchragt und in weiterer Folge mit dem Befestigungsabschnitt 5 kontaktiert. Die teleskopierbare Sattelstütze 1 ist am oberen Ende des Sattelrohres 16 durch das Gleitelement 8 am Sattelrohr 16 entlang der Längsachse LA verschiebbar gelagert. Das Teleskopelement 3 ragt dabei aus dem Sattelrohr 16 und dem darin befindlichen Gleitelement 8 heraus und ist entlang der Längsachse LA relativ zum Stützelement 4 bzw. zum Sattelrohr 16 verschiebbar gelagert. Ein Abstreifer 9 am Gleitelement 8 verhindert das Eindringen von Verunreinigungen in den Fahrradrahmen 17. Am oberen Ende des Teleskopelementes 3 befindet sich die Aufnahme für den Fahrradsattel. Das Befestigungselement 12 wird quer zur Längsachse LA in den Befestigungsabschnitt 5 eingesetzt.

Fig. 2a zeigt eine Schnittzeichnung des Detailbereichs A aus der Fig. 1, wobei das Sattelrohr 16 geschnitten dargestellt wird. Das Befestigungselement 12 ragt dabei durch die am Sattelrohr 16 befindlichen Verbindungsabschnitte 6. In diesem Ausführungsbeispiel wird gezeigt, wie sich an einer Seite des Sattelrohres 16 ein Verbindungsabschnitt 6 befindet und auf der gegenüberliegenden Seite ein zweiter Verbindungsabschnitt 6. Der Befestigungsabschnitt 5 befindet sich dabei zwischen den zwei Verbindungsabschnitten 6 und verharrt in dieser Position. Am Befestigungsabschnitt 5 ist das Stützelement 4 angeordnet. Somit werden Kräfte, welche sich über das Stützelement 4 nach unten in den Fahrradrahmen fortsetzen, über den Befestigungsabschnitt 5 in das Befestigungselement 12 und somit über die Verbindungsabschnitte 6 in das Sattelrohr 16 eingeleitet.

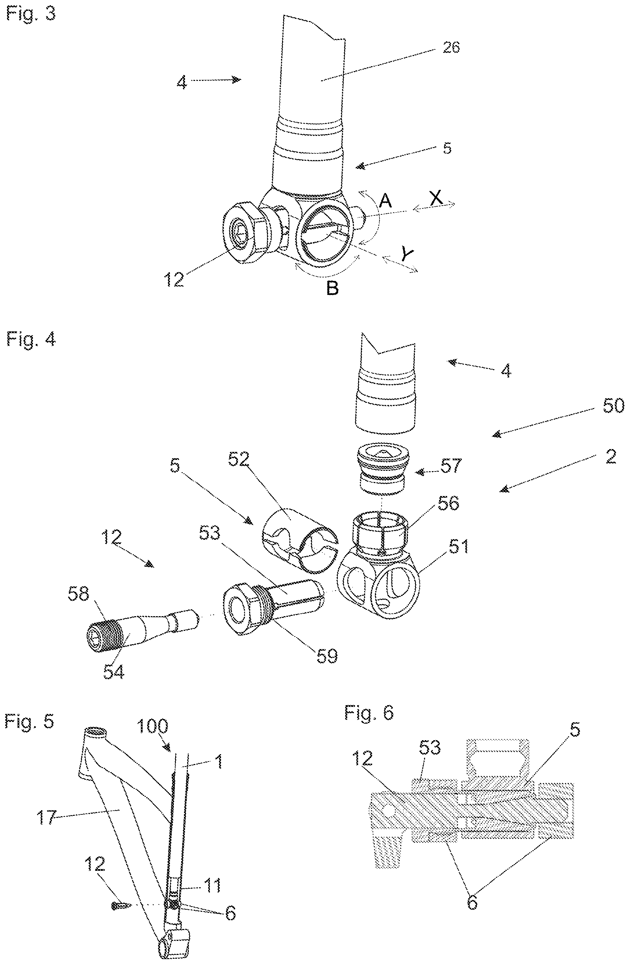

Fig. 2b zeigt eine Schnittdarstellung der Ausgleichsvorrichtung 2 bzw. der Überlastkupplung 50. Die Ausgleichsvorrichtung 2 besteht aus mehreren Einzelteilen, wie z. B. das Befestigungselement 12 und dem Befestigungsabschnitt 5. Das Befestigungselement 12 besteht aus einer Außenhülle 53 und einem darin verschiebbaren Spreizelement 54. Durch eine Bewegung des Spreizelementes 54 in die Außenhülle 53 wird die Außenhülle 53 nach außen gespreizt. Die Längsverstellung von Spreizelement 54 relativ zur Außenhülle 53 wird über das Verstellgewinde 58 erreicht, kann jedoch auch über einen Schnellspanner erzeugt werden. Die Außenhülle 53 selbst weist ebenfalls ein Befestigungsgewinde 59 auf, welches mit dem Verbindungsabschnitt 6 korrespondiert. Anstelle des Befestigungsgewindes 59 kann auch hier auf eine andere Befestigungsmöglichkeit wie Beispielsweise einen Schnellspanner mit Exzenter oder Kniehebel zurückgegriffen werden. Der Befestigungsabschnitt 5 weist ebenfalls verdrehbare und längs verschiebbare Elemente auf, welche durch das Spreizen der Außenhülle 53 in ihrer Form gesperrt werden. Diese werden in der Fig. 4 näher erläutert. Die Überlastkupplung 50, in diesem Ausführungsbeispiel direkt mit dem Befestigungsabschnitt 5 verbunden, ist als Rutschkupplung ausgeführt. Bei einer bestimmten Überlast kann somit das Stützelement 4 um die Längsachse LA gedreht werden. Die Kupplung kann als Reibkupplung, Klauenkupplung oder eine andere Art von Kupplung ausgestaltet sein. Ein Federelement an der Kupplung könnte z. B. für ein automatisches Rückstellen der Sattelstütze 1 relativ zum Sattelrohr 16 führen.

Fig. 3 zeigt die Ausgleichsvorrichtung 2 im entlasteten Zustand. Aufgrund der beweglichen Einzelteile sind Drehbewegungen um die Achse X bzw. um die Achse Y möglich - dies wird durch die Pfeile A bzw. B gezeigt. Weiters ist eine Verstellung entlang der Achsen X bzw. Y möglich, was ebenfalls durch Pfeile dargestellt wird. Im entlasteten Zustand kann sich somit der Befestigungsabschnitt 5 um und entlang dieser Achsen relativ zum Befestigungselement 12 bewegen. Wird das Spreizelement 54 im Befestigungselement 12 nach innen versetzt, werden die Bewegungen der einzelnen beweglichen Elemente durch das Aufspreizen der Außenhülle 53 zueinander gesperrt.

Fig. 4 zeigt eine Explosionsdarstellung des Befestigungselementes 12 und des Befestigungsabschnittes 5 bzw. der Überlastkupplung 50. Das Spreizelement 54 wird über ein Verstellgewinde 58 in die Außenhülle 53 gedreht. Dabei erfolgt eine Längsverstellung des Spreizelementes 54 relativ zur Außenhülle 53. Die Längsverstellung kann auch über ein anderes Konstruktionsmittel ausgeführt werden, wie zum Beispiel einen Hebel an einem Exzenter (siehe Fig. 6). Die Außenhülle 53 wird dabei radial gespreizt. Die Außenhülle 53 weist ein Befestigungsgewinde 59 auf, welches in weiterer Folge mit dem Rahmen des Fahrzeugs über die Verbindungsabschnitte 6 kontaktiert (in dieser Figur nicht dargestellt). Die Befestigung kann auch durch eine andere Art wie zum Beispiel einen aus dem Fahrradsektor bekannten Schnellspanner erfolgen. Die Außenhülle 53 greift in ein Einsatzteil 52 ein. Auch das Einsatzteil 52 ist radial aufspreizbar und wird bei Spreizung der Außenhülle 53 ebenfalls radial gespreizt. Diese radiale Spreizung überträgt sich auf das Korpusteil 51, wobei durch die Spreizkräfte, die sich von Außenhülle 53 auf das Einsatzteil 52 übertragen, die einzelnen Bestandteile nicht mehr zueinander frei bewegbar sind. Auf diese Weise kann im entspannten Zustand der Ausgleichsvorrichtung die Außenhülle 53 relativ zum Einsatzteil 52 und wiederum die Anordnung von Außenhülle 53 und Einsatzteil 52 zum Korpusteil 51 entlang der in Fig. 3 gezeigten Achsen und um diese Achsen frei bewegt werden. Bei Spreizung durch das Spreizelement 54 werden diese Bewegungen gesperrt. Die einzelnen spreizbaren Bestandteile bilden sich nach der Entlastung in ihre ursprüngliche Form elastisch zurück.

Fig. 5 zeigt den Einbau der Sattelstütze 1 in den Fahrradrahmen 17. Dabei wird das Befestigungselement 12 vor dem Einschieben der teleskopierbaren Sattelstütze in das Sattelrohr 16 entfernt. Nach Einschieben der Sattelstütze 1 in das Sattelrohr 16 wird das Befestigungsmittel 12 in den zumindest einen Verbindungsabschnitt 6 eingesetzt und anschließend befestigt.

Fig. 6 zeigt eine Variante des Befestigungsmittels 12 ausgeführt als Schnellspanner mit einem Exzenter. Bei Betätigung des Schnellspanners wird die Außenhülle 53 gespreizt, da sich das Befestigungsmittel vom zumindest einen Verbindungsabschnitt 6 abdrückt. Diese Art der Verbindung lässt sich auch mit einer Ausgleichsvorrichtung 2, wie in Fig. 2b gezeigt, kombinieren.

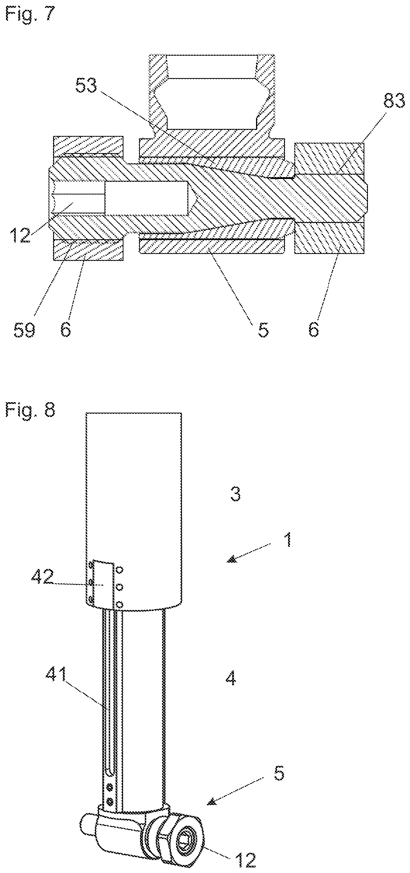

Fig. 7 zeigt eine weitere, vereinfachte Variante des Befestigungsmittels 12. Dabei wird die Außenhülle 53 direkt von einem der Verbindungsabschnitte 6 abgedrückt, sobald das Befestigungsmittel 12 darin eingesetzt wird. Einer der Verbindungsabschnitte 6 weist dabei zusätzlich eine Passung 83 für eine spielfreie Verbindung mit dem Befestigungsmittel 12 auf. Der weitere Verbindungsabschnitt 6 weist den Befestigungsbereich für das Befestigungsmittel 12 auf - in diesem Ausführungsbeispiel das Befestigungsgewinde 59. Diese Art der Verbindung lässt sich auch mit einer Ausgleichsvorrichtung 2, wie in Fig. 2b gezeigt, kombinieren. Anstelle von einer Kombination aus Passung 83 und Befestigungsgewinde 59 kann auch nur eine Verbindung über Befestigungsgewinde 59 in beiden Verbindungsabschnitten erfolgen. Denkbar ist auch, dass das Befestigungselement 12 direkt in den Befestigungsabschnitt 5 eingesetzt wird und keine Ausgleichsvorrichtung 2 verwendet wird. Dabei kann das Befestigungselement 12 ohne Konus ausgestaltet werden.

Fig. 8 zeigt eine Variante der Verdrehsicherung zwischen Teleskopelement 3 und Stützelement 4. Parallel zur Längsachse LA der Sattelstütze 1 erstreckt sich dabei eine Längsnut 41 in der Oberfläche des Stützelementes 4. In diese greift der Führungsabschnitt 42 ein, welcher fest mit dem Teleskopelement 3 verbunden ist. Somit wird eine spielfreie und stabile Verdrehsicherung ausgestaltet, die auf das Teleskopelement 3 einwirkenden Kräfte werden optimal über die Verdrehsicherung an das Stützelement weitergeleitet und über das Befestigungsmittel 12 an den Fahrradrahmen 17 übertragen.

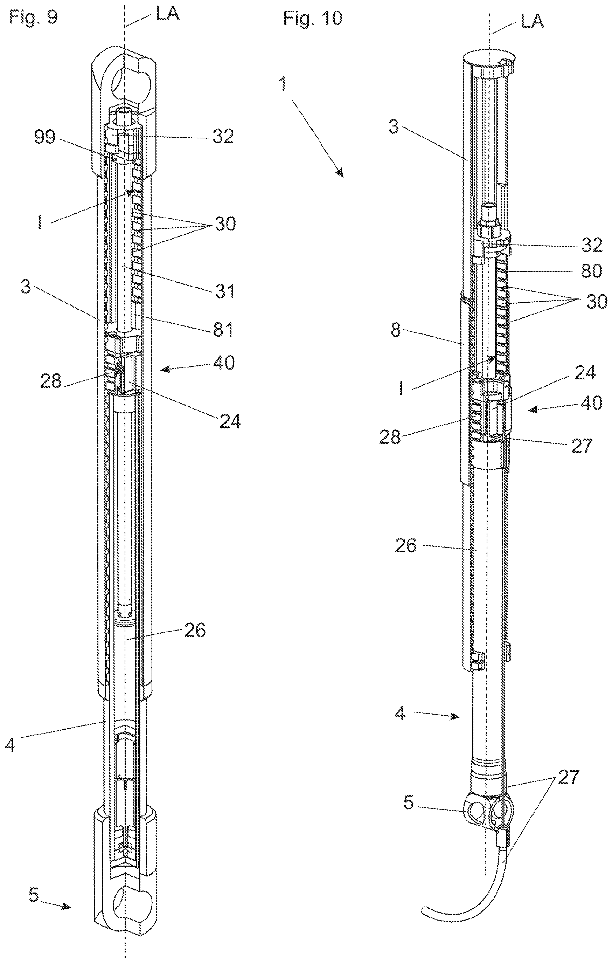

Fig. 9 zeigt eine Positioniervorrichtung 40 mit einer Rasterung 30, einer Arretiervorrichtung 24 mit zumindest einem Rastelement 28, welches in die Rasterung 30 eingreifbar an der Arretiervorrichtung 24 beweglich gelagert ist. Die Arretiervorrichtung 24 ist mit dem Stützelement 4 fest verbunden und das Stützelement 4 weist eine Kraftquelle 26 auf. Die Kraftquelle 26 ist beispielsweise als Gasdruckfeder ausgeführt, deren Stange 31 - in anderen Worten: Zylinderstange - über den Stangenadapter und die Stangenarretierung 32 mit der Rasterung 30 des Teleskopelementes 3 in Kontakt steht. Wird das Teleskopelement 3 bewegt und die Arretiervorrichtung 24 ist in einer Offenstellung (greift somit nicht in die Rasterung 30 ein) kann das Teleskopelement 3 entlang seiner Längsachse LA und dem Stützelement 4 bewegt werden. Die Rasterung 30 befindet sich an der Innenseite des Teleskopelementes 3 und ist somit vor Verunreinigungen geschützt. Auch die Arretiervorrichtung 24 befindet sich im Inneren verbaut und ist vor Umwelteinflüssen geschützt gelagert. Die Oberfläche des Stützelementes 4 korrespondiert mit der Form der Innenseite des Teleskopelementes 3. Dies kann entweder direkt erfolgen oder durch zwischen dem Teleskopelement 3 und dem Stützelement 4 befindliche Gleitelemente und/oder Dichtungen. Ein spielfreies Verschieben des Teleskopelementes 3 auf dem Stützelement 4 ist somit gewährleistet.

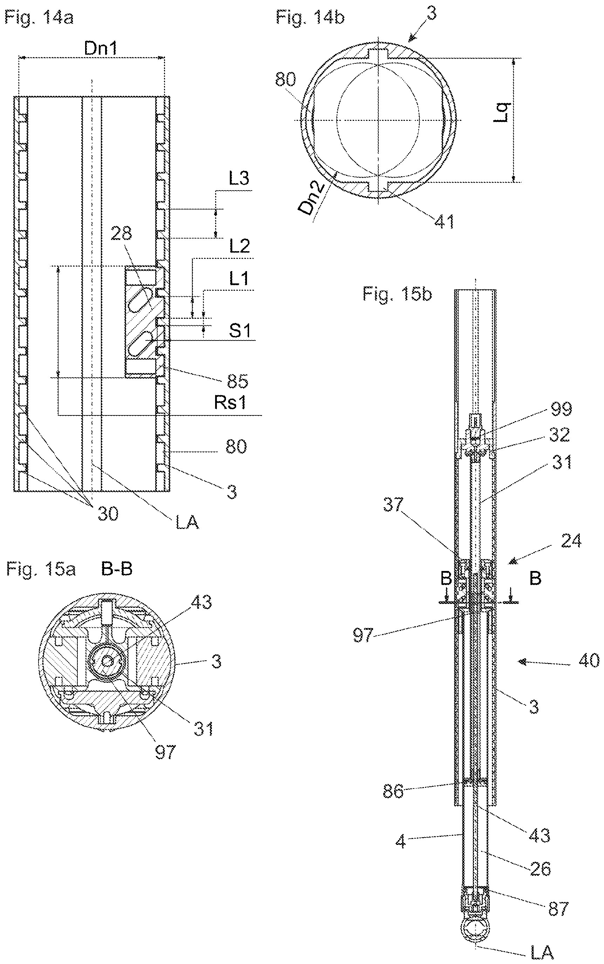

Fig. 10 zeigt die Anwendung der Positioniervorrichtung 40 in einer teleskopierbaren Sattelstütze für ein Fahrrad. Dabei wird über einen Aktuator 27 die Arretiervorrichtung 24 entweder in eine Offenstellung oder in eine Schließstellung gebracht. Das zumindest eine Rastelement 28 wird über den Aktuator 27 betätigt. Wird beispielsweise im Aktuator 27 gezogen, zieht sich das zumindest eine Rastelement in Richtung der Längsachse LA radial zurück und hat keinen Kontakt mehr zur Rasterung 30. Somit ist die Arretiervorrichtung 24 in eine Offenstellung gebracht worden und das Teleskopelement 3 lässt sich entlang der Längsachse LA relativ zum Stützelement 4 verschieben. Wird keine Kraft auf den Aktuator 27 ausgeübt, geht das zumindest eine Rastelement 28 schlagartig in die Schließposition zurück und nimmt Kontakt zur Rasterung 30 auf. Ein Verschieben des Teleskopelementes 3 entlang der Längsachse LA und entlang des Stützelementes 4 ist somit nicht mehr möglich. das Teleskopelement 3 kann über die Stangenarretierung 32 in seiner Position relativ zum Stützelement 4 zusätzlich verändert werden. Über diese Einstellung kann die tatsächliche Länge der teleskopierbaren Sattelstütze 1 grundeingestellt werden Mittels diesen Mechanismus wird der untere Anschlagpunkt bzw. die minimale Sattelhöhe eingestellt. Über einen Anschlagring 98, welcher entlang der Rasterung 30 verstellbar ist, oder über eine Hubbegrenzung der Stange 31 (siehe Fig15b), kann die maximale Sattelposition und somit der Systemhub eingestellt werden. Personen mit einer großen Schrittlänge können somit die Maximallänge der teleskopierbaren Sattelstütze 1 an ihre Körpereigenschaften anpassen sowie auch Fahrradfahrer mit einer kürzeren Schrittlänge. Die Grundeinstellung der teleskopierbaren Sattelstütze 1 erfolgt somit über die Stangenarretierung 32, den Anschlagring 98 oder eine Hubbegrenzung der Stange 31 (siehe Fig15b), das abschnittsweise Positionieren entlang der Längsachse während dem Fahrbetrieb des Fahrrades erfolgt über die Arretiervorrichtung 24. Die teleskopierbare Sattelstütze 1 ist über den Befestigungsabschnitt 5 mit dem Fahrradrahmen 17 (in dieser Figur nicht dargestellt) verbunden.

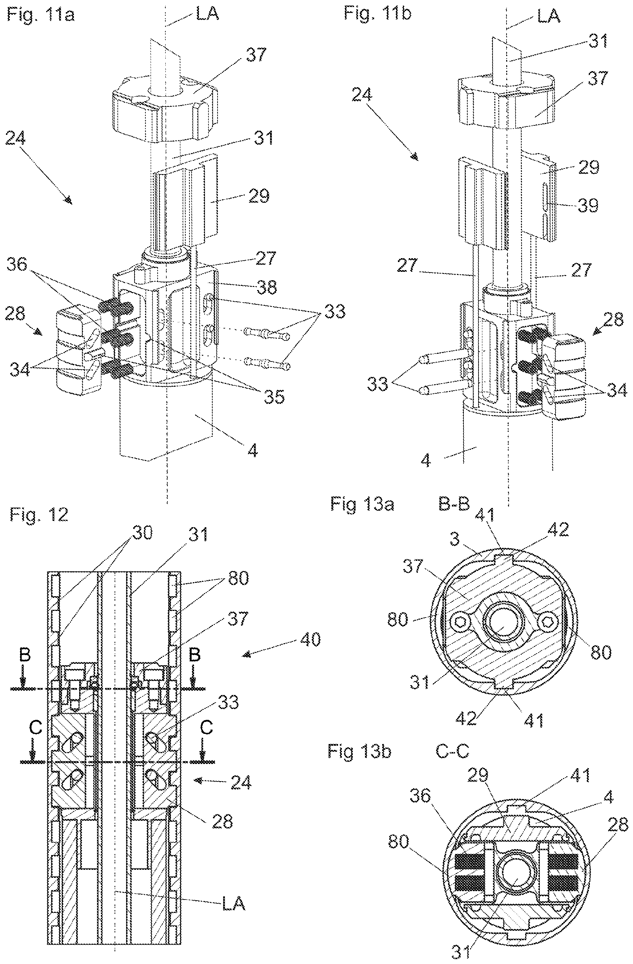

Fig. 11a zeigt die Arretiervorrichtung 24 mit zumindest einem Rastelement 28, welches über Aufnehmer 35 mit einem Gehäuse 38 verbunden ist. Zwischen dem zumindest einen Rastelement 28 und dem Gehäuse 38 befindet sich zumindest eine Rückstelleinheit 36 in Form einer Feder, eines Elastomers oder auch eines hydraulischen oder pneumatischen Stößels. Durch die zumindest eine Rückstelleinheit 36 wird das Rastelement 28 permanent radial von der Längsachse LA oder quer zur Längsachse LA weggedrückt und vom Gehäuse 38 weggespreizt. Das Rastelement 28 greift dabei in die Rasterung 30 (in dieser Figur nicht dargestellt) ein. Durch die zumindest eine Rückstelleinheit 36 entsteht somit eine selbsthemmende Arretierung des zumindest einen Rastelements 28 an der Rasterung 30. Das zumindest eine Rastelement 28 wird über Umlenker 33, welche beweglich im Gehäuse 38 gelagert sind, gegen die zumindest eine Rückstelleinheit 36 bewegt. Dabei kann der Umlenker 33 als Kipphebel - wie in der Fig. 11a dargestellt - ausgeführt sein: auf einer Seite wird der Umlenker 33 mit seinem Kopf gelenkig und starr relativ zur Längsachse LA gelagert, der mittlere Bereich des Umlenkers 33 greift in eine Schrägfläche 34 des Rastelementes 28 ein und an einem vom Kopf abgewandten Ende wird der Umlenker 33 bewegt. Durch den Kontakt des Umlenkers 33 mit der Schrägfläche 43 wird das Rastelement 28 bewegt. Die Bewegung des Umlenkers 33 erfolgt über das Betätigungselement 29. Das Betätigungselement 29 ist entlang der Längsachse LA beweglich mit dem Gehäuse 38 verbunden. Die Umlenker 33 greifen in dieses längsbewegliche Betätigungselement 29 ein und werden relativ zu den Schrägflächen 34 am Rastelement 28 bewegt. Durch die Rückstellkraft der zumindest einen Rückstelleinheit 36 und der entgegenwirkenden Kraft durch das Betätigungselement 29 und dem daran befindlichen Aktuator 27 wird das Rastelement 28 vom Gehäuse 38 weg bewegt oder an das Gehäuse 38 herangezogen.

Die Fig. 11b zeigt ein weiteres Ausführungsbeispiel der Arretiereinheit 24. Die Umlenker 33 sind dabei nicht als Kipphebel ausgeführt, sondern werden an ihren beiden Enden durch jeweils ein Betätigungselement 29 gelagert. Durch die beidseitige Lagerung der Betätigungselemente 29 und der Verbindung der Betätigungselemente 29 mit den Aktuatoren 27 werden die Umlenker 33 entlang der Längsachse LA und auch entlang der Schrägflächen 34 des Rastelementes 28 bewegt. Wie auch in der Fig. 13a geschildert, führt die Bewegung der Umlenker 33 dazu, dass das Rastelement 28 radial vom Gehäuse 38 wegbewegt oder an dieses herangezogen wird und das Rastelement 28 in eine Offen- oder Schließstellung verfährt.

Fig. 12 zeigt eine Positioniereinheit 40 in der Schnittdarstellung im Detail. Die Rasterung 30 besteht aus den Radialnuten 80, in welche die Rastelemente 28 eingreifen. Entlang der Stange 31 befindet sich zumindest ein Führungselement 37, welches das Teleskopelement 3 radial spielfrei mit der Stange 31 verbindet. Die Stange 31 ist Bestandteil des Stützelementes 4. Weiters zwischen Stange 31 und Teleskopelement 3 angeordnet befindet sich die Arretiervorrichtung 24 mit den Rastelementen 28.

In der Fig. 13a dargestellt ist der Bereich B-B aus der Fig. 12. In dieser Querschnittzeichnung wird gezeigt, wie das Führungselement 37 mit seinem Führungsabschnitt 42 in die Führungsnut 41 des Teleskopelementes 3 eingreift. Das Führungselement 37 ist dabei radial spielfrei mit der Stange 31 verbunden.

Fig. 13b zeigt den Schnitt C-C aus der Fig. 12. Erkennbar dabei ist, wie das zumindest eine Rastelement 28 in die Radialnut 80 eingreift. Dies erfolgt durch die Rückstelleinheit 36. Sollte das zumindest eine Rastelement 28 aus der Radialnut 80 herausgezogen werden, muss gegen die Rückstellkräfte der Rückstelleinheit 36 gearbeitet werden. Dies erfolgt über Betätigung des Aktuators 27 (in dieser Zeichnung nicht dargestellt). Die Führungsnut 41 ist relativ zum Zentrum der zumindest einen Radialnut 80 um 90° versetzt angeordnet.

Fig. 14a zeigt eine Schnittdarstellung der Positioniervorrichtung 40. Die Rastung 30 erstreckt sich mit einem Rastabstand L3 entlang dem Teleskopelement 3. Der Rastabstand L3 beträgt vorzugsweise 6mm. Dies ermöglicht eine Positionierung des zumindest einen Rastelementes 28 in einem 6mm Raster entlang der Längsachse LA der Positioniervorrichtung 40 und somit eine Längenverstellung in 6mm Schritten. Je nach Art des Einsatzes der Positioniervorrichtung 40 kann dieser Wert variieren. Der maximale Innendurchmesser des rohrförmigen Teleskopelementes 3 - folglich Nutendurchmesser Dn1 genannt - beträgt 30mm. Je nach Art des Einsatzes der Positioniervorrichtung 40 kann dieser Wert variieren. Wichtig ist jedoch, dass die Werte in einer gewissen Art miteinander in einem Verhältnis stehen, um eine optimale Stabilität und auch Rastverbindung bei einer kompakten Bauweise zu erzielen. Die Radialnuten 80 zur Aufnahme zumindest einer Nocke 85 eines Rastelementes 28 sind wie folgt ausgestaltet: Die Rastnutbreite L2 weist einen Wert von 4,5mm und die Rastflankenhöhe S1 einen Wert von 1,5mm auf. Korrespondierend dazu ist mit einem geringen Untermaß die zumindest eine Nocke 85 ausgestaltet, um spielfrei in der zumindest einen Radialnut 80 eingreifen zu können. Ein Rastelement 28 weist zumindest eine Nocke 85 auf. Eine Ausführung mit zumindest 2 Nocken 85 ist vorzuziehen, vorzugsweise kommen 4 Nocken an einem Rastelement 28 zum Einsatz. Die effektive Länge des Rastelementes, gemessen im Montagezustand entlang der Längsachse LA, beträgt 23mm. Der Nutformdurchmesser Dn2, gezeigt in der Fig. 14b - eine Querschnittszeichnung des Teleskoprohres 3 - errechnet sich aus dem Querabstand Lq. Dieser beträgt 25,5mm.

Folgende Rechnungen zeigen die Verhältnisse der Maße zueinander:

$$Dn2 = Lq \times 0,95$$

$$Dn1 / 20 = S1$$

$$S1 \times 1 \text{ bis } S1 \times 9 = S1$$

$$D1 / 10 \text{ bis } D1 / 2 = L3$$

$$Dn1 / 1,3 = Rs1$$

Fig. 15a zeigt eine Anschlagspindel 43 in einer Anschlagmutter 97 in einer Stange 31 im Querschnitt. Durch ein Gewinde im Inneren der Anschlagmutter 97, welches mit einem Gewinde an der Anschlagspindel 43 korrespondiert und einer verdrehfesten und linear gleitenden Lagerung zwischen Stange 31 und Anschlagmutter 97 wird durch eine Drehbewegung der Stange 31 um die Längsachse LA aufgrund der Gewindesteigung die Position der Anschlagmutter 97 relativ zur Anschlagspindel 43 verändert. An der Stange 31 befindet sich beispielsweise ein Kolben 86 eines als Kraftspeicher 26 agierenden Gaszylinders, was in Fig. 15b ersichtlich ist. Durch die Veränderung der Drehposition der Stange 31, in diesem Ausführungsbeispiel die Kolbenstange des Gaszylinders, welcher gleichzeitig das Stützelement 4 darstellt, wird die Position der Anschlagmutter 97 relativ zur Anschalgspindel 43 verändert, wobei die Anschlagspindel 43 am Zylinderboden 87 fix montiert ist. Durch diese Veränderung tritt der Kolben 86 je nach Einstellung der Anschlagmutter 97 zur Anschlagspindel 43 entweder früher oder später bei einer Bewegung der Stange 31 mit der Anschlagmutter 97 in Kontakt, was eine einstellbare Hubbegrenzung der Positioniervorrichtung 40 ausbildet.

Die Verstellung der Stange 31 relativ zur Anschlagspindel 43 kann werkzeuglos oder durch ein Werkzeug erfolgen. Erreichbar ist die Stange 31 zum Beispiel durch das obere Ende der Positioniervorrichtung 40. Durch das Lösen des Kontakts des Teleskopelements 3 und des Führungselement 37 und bei einem verdrehfesten, aber linear gleitenden Kontakt zwischen Stange 31 und Teleskopelement 3, kann durch die Rotation des Teleskopelements 3 die Anschlagposition eingestellt werden. Dies entspricht einer Einstellung der Sattelhöhe durch eine Rotation des Sattels.

Die Bewegung der Stange 31 entlang der Längsachse LA ist gedämpft; dies kann beispielsweise über Drosselbohrungen oder Endlagendämpfungen am Kolben 86 erfolgen. Es ist eine Drosselung der Ausfahrgeschwindigkeit in nur eine Richtung möglich, hierzu wird am Kolben zusätzliche ein Rückschlageelement platziert, wodurch der Sattel kontrolliert ausfährt, jedoch beim Versenken durch das Körpergewicht keine Zusätzliche Gegenkraft entsteht.

Der Stangenadapter 99 und die Stangenarretierung 32 sind zueinander um die Achse LA rotierbar gelagert. Entlang der Achse LA besteht eine lösbare Verbindung, welche entweder kraftschlüssig über mechanische Rasten bzw. über kreisförmig angeordnete Magnete, oder formschlüssig über eine abnehmbare Mutter bzw. einen abnehmbare Sicherungsring ausgeführt werden kann. Bei einer kraftschlüssigen Verbindung zwischen Stangenadapter 99 und Stangenarretierung 32 kann diese, bei einer Offenstellung der Arretiervorrichtung 24 (siehe Fig. 9), durch aufbringen einer bestimmten Mindestkraft am Teleskopelement 3 gelöst werden. Dies entspricht einer werkzeuglosen Demontage des Teleskopelements 3.

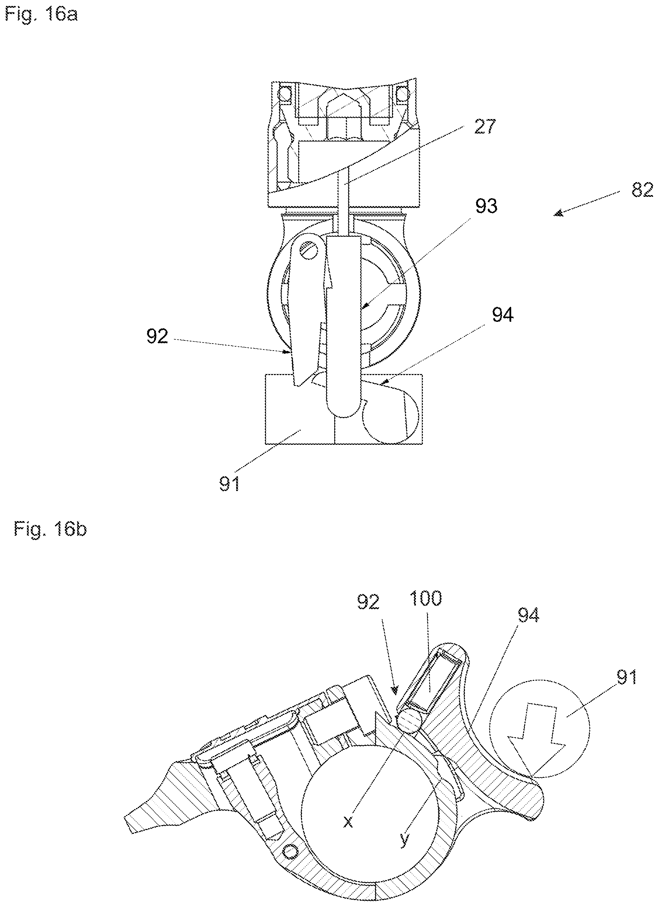

Fig. 16 a und 16b zeigt eine Remotesteuerung 82 mit Einrichtung zur schlagartigen Freigabe des Aktuators 27. Zwischen einer Kraftquelle 91, zum Beispiel durch einen Daumen des Bedieners, einen Elektromotor oder einen Zylinder ausgebildet, besteht zum Lösen der Arretiervorrichtung 28 und dem Aktuator 27 eine Mechanik mit einer haltenden Komponente 92, welche vorzugsweise so ausgeführt ist, dass der Aktuator 27 in der Lösestellung ohne ein weiteres Einwirken der Kraftquelle 91, gehalten wird. Erst durch Überschreiten einer gewissen Freigabekraft der haltenden Komponente 92, oder durch Lösen der haltenden Komponente 92 wird der Aktuator 27 schlagartig freigegeben. Somit wird das sofortige und gänzliche Einrasten der Rastelemente 28 in den vorgesehenen Rastnuten 80 gewährleistet und sehr geringe Rastabstände bei niedrigen Betriebs-Verschleißerscheinung werden erreicht.

In der Fig. 16 a wird beispielsweise ein Servomotor als Kraftquelle 91 verwendet. Dieser weist einen Betätigungshebel 94 auf, welcher mit der Klinke 92 in Wirkverbindung steht. Durch ein Zusammenwirken von Betätigungshebel 94 und Klinke 92 wird bei einer Bewegung des Servomotors ein schlagartiges Verschieben des Bolzen 93 erzielt, welcher mit dem Aktuator verbunden ist.

In der Fig. 16b wird eine Remotesteuerung 82 gezeigt, welche mittels einer externen Kraftquelle 91 wie z.B. von einem Daumen oder einem Zylinder betätigt wird. Diese wirkt auf den Betätigungshebel 94 ein, welcher durch ein Federelement 100 einer Klinke 92 in einer Schließlage x gehalten wird. Dieses Halten in einer bestimmten Lage x oder y kann beispielsweise durch einen Kugelsitz oder Rasten mit korrespondierendem Gegenstück (Kugel, Stößel) erfolgen. Überwiegt die Kraft der Kraftquelle 91 die Kraft des Federelementes 100 geht der Betätigungshebel 94 und somit auch der Aktuator schlagartig in eine Offenlage y über. Die Rastelemente 28 rasten somit schlagartig in die Rasterung 30 ein.

**Patentansprüche**

1. Anordnung aus einer teleskopierbaren Sattelstütze (1) und einem Fahrradrahmen (17), umfassend:

   - ein rohrförmig ausgestaltetes Teleskopelement (3) zur Lagerung eines Sattels, wobei das Teleskopelement (3) entlang einer Längsachse (LA) eines Sattelrohres (16) des Fahrradrahmens (17) verschiebbar gelagert ist,

- ein rohrförmig ausgestaltetes Stützelement (4), welches im Teleskopelement (3) verschiebbar gelagert ist, wobei das Stützelement (4) einen Befestigungsabschnitt (5) aufweist, der über ein quer zur Längsachse (LA) des Sattelrohres (16) einsetzbares Befestigungselement (12) mit dem Sattelrohr (16) verbunden ist, **dadurch gekennzeichnet, dass** sich zur Verdrehsicherung zwischen Teleskopelement (3) und Stützelement (4) parallel zur Längsachse (LA) der Sattelstütze (1) eine Längsnut (41) in der Oberfläche des Stützelementes (4) oder des Teleskopelements (3) erstreckt, in welche ein Führungsabschnitt (42) eingreift, welcher fest mit dem Teleskopelement (3) oder dem Stützelement (4) verbunden ist.

2. Anordnung nach Anspruch 1, **dadurch gekennzeichnet, dass** die Befestigung des Befestigungsabschnittes (5) durch ein lösbares Befestigungselement (12) erfolgt.

3. Anordnung nach Anspruch 1 oder 2, **dadurch gekennzeichnet, dass** das Befestigungselement (12) mit zumindest einem Verbindungsabschnitt (6) des Sattelrohres (16) verbunden ist, wobei sich die Verbindungsabschnitte (6) im Wesentlichen in einer unteren Hälfte des effektiv nutzbaren Sattelrohres (16) befinden.

4. Anordnung nach einem der Ansprüche 1 bis 3, **dadurch gekennzeichnet, dass** die Sattelstütze (1) eine Überlastkupplung (50) aufweist, welche im Montagezustand bei Überlast ein Verdrehen der Sattelstütze (1) relativ zum Sattelrohr (16) um die Längsachse (LA) zulässt.

5. Anordnung nach Anspruch 4, **dadurch gekennzeichnet, dass** die Sattelstütze (1) nach einer Verdrehung der Überlastkupplung (50) werkzeuglos in ihre ursprüngliche Lage zurückstellbar ist oder sich diese automatisch in ihre ursprüngliche Lage zurückstellt.

6. Anordnung nach Anspruch 4 oder 5, **dadurch gekennzeichnet, dass** die Überlastkupplung (50) zwischen Stützelement (4) und dem Befestigungsabschnitt (5) positioniert ist.

7. Anordnung nach einem der Ansprüche 1 bis 6, **dadurch gekennzeichnet, dass** der Befestigungsabschnitt (5) zusammen mit dem Befestigungselement (12) eine Ausgleichsvorrichtung (2) ausbildet, welche in Montagestellung der Sattelstütze (1) die bei der Herstellung von einem Fahrradrahmen (17) entstehenden Fertigungstoleranzen am Sattelrohr (16) zwischen dem Sattelrohr (16) und der Sattelstütze (1) ausgleicht.

8. Anordnung nach Anspruch 7, **dadurch gekennzeichnet, dass** die Ausgleichsvorrichtung (2) eine im losen Zustand des Befestigungselements (12) im Befestigungsabschnitt (5) relativ zu einem Einsatzteil (52) frei bewegliche Außenhülle (53) aufweist und die Anordnung von Außenhülle (53) und Einsatzteil (52) zu einem Korpusteil (51) beweglich sind, wobei im befestigten Zustand des Befestigungselementes (12) im Befestigungsabschnitt (5) das Einsatzteil (52) zur Außenhülle (53) und die Anordnung von Außenhülle (53) und Einsatzteil (52) zu einem Korpusteil (51) zueinander unbeweglich sind.

9. Anordnung nach einem der Ansprüche 1 bis 8, **dadurch gekennzeichnet, dass** das Stützelement (4) einen Kraftspeicher (26) aufweist oder durch einen Kraftspeicher (26) - vorzugsweise einem Gasdruckzylinder - ausgebildet wird.

10. Anordnung nach einem der Ansprüche 1 bis 9, **dadurch gekennzeichnet, dass** ein Gleitelement (8) am Sattelrohr (16) angeordnet ist, in welchem das Teleskopelement (3) entlang der Längsachse (LA) verschiebbar gelagert ist, wobei zumindest ein Abstreifer (9) am Gleitring (8) angeordnet ist.

**Claims**

1. Arrangement of a telescopic seat post (1) and a bicycle frame (17), comprising:

   - a tubular telescopic element (3) for mounting a saddle, the telescopic element (3) being slidably mounted along a longitudinal axis (LA) of a seat tube (16) of the bicycle frame (17),
   - a tubular support element (4) which is displaceably mounted in the telescopic element (3),

   wherein the supporting element (4) has a fastening section (5) which is connected to the seat tube (16) via a fastening element (12) which can be inserted transversely to the longitudinal axis (LA) of the seat tube (16), **characterized in that** for an anti-twist protection between the telescopic element (3) and the supporting element (4) a longitudinal groove (41) parallel to the longitudinal axis (LA) of the seat post (1) extends in the surface of the supporting element (4) or the telescopic element (3), into which engages a guide portion (42), which is fixedly connected to the telescopic element (3) or the supporting element (4).

2. Arrangement according to claim 1, **characterized in that** the fastening section (5) is fastened by a detachable fastening element (12).

3. Arrangement according to claim 1 or 2, **character-**

ized in that the fastening element (12) is connected to at least one connecting section (6) of the seat tube (16), the connecting sections (6) being essentially located in a lower half of the effectively usable seat tube (16).

4. Arrangement according to one of claims 1 to 3, **characterized in that** the seat post (1) has an overload clutch (50) which, in the assembled state in the event of an overload allows the seat post (1) to rotate relative to the seat tube (16) about the longitudinal axis (LA).

5. Arrangement according to claim 4, **characterized in that** the seat post (1) can be returned to its original position without tools after the overload clutch (50) has been rotated, or it is automatically reset to its original position.

6. Arrangement according to claim 4 or 5, **characterized in that** the overload clutch (50) is positioned between the support element (24) and the fastening section (5).

7. Arrangement according to one of claims 1 to 6, **characterized in that** the fastening section (5) together with the fastening element (12) forms a compensating device (2) which, in the assembled position of the seat post (1), is used to compensate manufacturing tolerances between the seat tube (16) and the seat post (1) occurring during the production of a bicycle frame (17).

8. Arrangement according to claim 7, **characterized in that** the compensating device (2) has an outer sleeve (53) which can move freely relative to an insert part (52) when the fastening element (12) is in the loose state in the fastening section (5), and the arrangement of outer sleeve (53) and insert part (52) are movable to a body part (51), wherein in the fastened state of the fastening element (12) in the fastening section (5), the insert part (52) to the outer shell (53) and the arrangement of outer shell (53) and insert part (52) to a body part (51) are mutually immovable.

9. Arrangement according to one of claims 1 to 8, **characterized in that** the support element (4) has an energy store (26) or is formed by an energy store (26) - preferably a gas pressure cylinder.

10. Arrangement according to one of Claims 1 to 9, **characterized in that** a sliding element (8) is arranged on the seat tube (16), in which the telescopic element (3) is mounted so that it can be displaced along the longitudinal axis (LA), wherein at least one wiper (9) is arranged on the sliding ring (8).

**Revendications**

1. Ensemble composé d'un support de selle (1) télescopique et d'un cadre de bicyclette (17), comprenant :

   - un élément télescopique (3) configuré de manière tubulaire pour le montage d'une selle, dans lequel l'élément télescopique (3) est monté de manière à pouvoir coulisser le long d'un axe longitudinal (LA) d'un tube de selle (16) du cadre de bicyclette (17),
   - un élément de support (4) configuré de manière tubulaire, lequel est monté de manière à pouvoir coulisser dans l'élément télescopique (3), dans lequel l'élément de support (4) présente une section de fixation (5), qui est reliée au tube de selle (16) par l'intermédiaire d'un élément de fixation (12) pouvant être inséré de manière transversale par rapport à l'axe longitudinal (LA) du tube de selle (16), **caractérisé en ce que** s'étend, pour le blocage en rotation, entre l'élément télescopique (3) et l'élément de support (4), de manière parallèle à l'axe longitudinal (LA) du support de selle (1), une rainure longitudinale (41) dans la surface de l'élément de support (4) ou de l'élément télescopique (3), avec laquelle une section de guidage (42) vient en prise, laquelle est reliée de manière solidaire à l'élément télescopique (3) ou à l'élément de support (4).

2. Ensemble selon la revendication 1, **caractérisé en ce que** la fixation de la section de fixation (5) est effectuée par un élément de fixation (12) amovible.

3. Ensemble selon la revendication 1 ou 2, **caractérisé en ce que** l'élément de fixation (12) est relié à au moins une section de liaison (6) du tube de selle (16), dans lequel les sections de liaison (6) se trouvent sensiblement dans une moitié inférieure du tube de selle (16) pouvant effectivement être utilisé.

4. Ensemble selon l'une quelconque des revendications 1 à 3, **caractérisé en ce que** le support de selle (1) présente un couplage de surcharge (50), lequel autorise à l'état monté, en cas de surcharge, une rotation du support de selle (1) par rapport au tube de selle (16) autour de l'axe longitudinal (LA).

5. Ensemble selon la revendication 4, **caractérisé en ce que** le support de selle (1) peut être ramené sans outil dans sa position initiale après une rotation du couplage de surcharge (50) ou revenir automatiquement dans sa position initiale.

6. Ensemble selon la revendication 4 ou 5, **caractérisé en ce que** le couplage de surcharge (50) est positionné entre l'élément de support (4) et la section de fixation (5).

7. Ensemble selon l'une quelconque des revendications 1 à 6, **caractérisé en ce que** la section de fixation (5) réalise conjointement avec l'élément de fixation (12) un dispositif de compensation (2), lequel compense, en position de montage du support de selle (1), les tolérances de fabrication apparaissant lors de la fabrication d'un cadre de bicyclette (17) sur le tube de selle (16) entre le tube de selle (16) et le support de selle (1).

8. Ensemble selon la revendication 7, **caractérisé en ce que** le dispositif de compensation (2) présente une enveloppe extérieure (53) librement mobile par rapport à une pièce d'insertion (52) dans l'état lâche de l'élément de fixation (12) dans la section de fixation (5), et l'ensemble de l'enveloppe extérieure (53) et de la pièce d'insertion (52) est mobile par rapport à une partie de corps (51), dans lequel, dans l'état fixé de l'élément de fixation (12) dans la section de fixation (5), la pièce d'insertion (52) est immobile par rapport à l'enveloppe extérieure (53) et l'ensemble de l'enveloppe extérieure (53) et de la pièce d'insertion (52) est immobile par rapport à une partie de corps (51).

9. Ensemble selon l'une quelconque des revendications 1 à 8, **caractérisé en ce que** l'élément de support (4) présente un accumulateur d'énergie (26) ou est réalisé par un accumulateur d'énergie (26) - de préférence un vérin à pression de gaz.

10. Ensemble selon l'une quelconque des revendications 1 à 9, **caractérisé en ce qu'**un élément de glissement (8) est disposé sur le tube de selle (16), dans lequel l'élément télescopique (3) est monté de manière à pouvoir coulisser le long de l'axe longitudinal (LA), dans lequel au moins un racleur (9) est disposé sur la bague de glissement (8).

Fig. 1

Fig. 2a

Fig. 2b

Fig. 3

4 →

26

5

A

X

Y

12

B

Fig. 4

4

50

2

52

5

57

56

53

51

12

58

54

59

Fig. 5

100

1

17

12

11

6

Fig. 6

12

53

5

6

EP 3 325 333 B1

Fig. 7

Fig. 8

Fig. 9

Fig. 10

LA

LA

1

3

99

32

32

I

80

30

30

31

3

81

8

3

28

I

40

24

24

28

40

27

26

26

4

4

5

5

27

Fig. 11a

Fig. 11b

Fig. 12

Fig 13a  B-B

Fig 13b  C-C

Fig. 14a

Fig. 14b

Fig. 15a  B-B

Fig. 15b

Fig. 16a

Fig. 16b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2284068 A2
- CN 2261975 Y
- US 2014112703 A1
- US 7364179 B1
- NL 9001358 A
- US 20090324327 A